# EUROPÄISCHE PATENTSCHRIFT

(11) **EP 3 896 012 B1**
(45) Veröffentlichungstag und Bekanntmachung des Hinweises auf die Patenterteilung: **06.11.2024**
(21) Anmeldenummer: 21168612.6
(22) Anmeldetag: 15.04.2021
(51) Int. Cl.: B65G 25/10, B65G 65/44

(54) **FÖRDERSYSTEM FÜR SCHÜTTGUT UND VERFAHREN ZUR FÖRDERUNG VON SCHÜTTGUT**
CONVEYOR SYSTEM FOR BULK MATERIAL AND METHOD FOR CONVEYING BULK MATERIAL
SYSTÈME DE TRANSPORT POUR PRODUITS EN VRAC ET PROCÉDÉ DE TRANSPORT DES PRODUITS EN VRAC

(30) Priorität: 15.04.2020 DE 102020110293
(43) Veröffentlichungstag der Anmeldung: 20.10.2021
(73) Patentinhaber: Wissing, Johannes, 48703 Stadtlohn (DE)
(72) Erfinder: Wissing, Johannes, 48703 Stadtlohn (DE)
(74) Vertreter: Dr. Träger & Strautmann PAe PartG mbB

(56) Entgegenhaltungen:
- EP-B1- 2 578 518
- DD-A1- 25 519
- DE-A1- 2 558 884
- DE-B- 1 215 051
- DE-B- 1 292 066
- DE-U1- 202007 009 040
- DE-U1- 29 806 192
- US-A- 3 175 677
- US-B1- 6 446 298

## Beschreibung

Die Erfindung betrifft ein Fördersystem für Schüttgut gemäß dem Oberbegriff des Anspruchs 1. Des Weiteren betrifft sie ein Verfahren zur Förderung von Schüttgut gemäß dem Oberbegriff des Anspruchs 14.

Fördersysteme, wie die hier beschriebenen, werden beispielsweise eingesetzt, um spezielle Materialien wie Schüttgut zu fördern. Beim Schüttgut handelt es sich vorzugsweise um pastöse und/oder stückige und/oder faserige Materialien. Insbesondere handelt es sich um Biomasse oder auch Siloinhalte, wie sie beispielsweise für Fermentationsprozesse oder auch in der Tierfütterung verwendet werden. Schüttgut und andere zu fördernde Stoffe werden im Folgenden auch einfach als Material bezeichnet.

Typischerweise werden diese Materialien in Behältern wie beispielsweise Silowagen zwischengelagert, aus denen sie zum jeweiligen Einsatzzweck herausgefördert werden. Derartige Materialien sind aufgrund der teilweise hochviskosen, beispielsweise durch faserige Bestandteile sehr kompakten und wenig fließfähigen Konsistenz nur mit speziellen Fördersystemen handhabbar. Neben den hier nicht relevanten förderbandähnlichen Kratzböden kommen vor allen sogenannte Förderschieber in Betracht, von denen bei den hier beschriebenen Fördersystemen ausgegangen wird.

Bei den bekannten Förderschiebern als Fördersystem sind mehrere Förderschienen parallel zueinander und längsverschieblich auf einem Untergrund angeordnet. An jeder Förderschiene sind mehrere Schieber als Förderschieber angeordnet. Deren Schieberelemente dienen als Mitnehmer für das zu fördernde Material, wenn sich die Förderschienen alternierend bewegen. Bei einer Vorschubbewegung soll eine Förderung erfolgen. Eine Rückzugbewegung ist zur Rückkehr in die Grundstellung erforderlich und soll darüber hinaus zur Materialaufnahme dienen. Die bekannten Schieber weisen eine im Wesentlichen dreieckige Draufsicht auf und verdrängen das Material bei der Rückzugsbewegung seitlich. Die DE 20 2007 009 040 U1 zeigt eine derartige Vorrichtung.

Nachteilig am Stand der Technik ist insbesondere, dass vor allem bei sehr festen Materialien hohe Belastungen auf das Fördersystem einwirken. Diese werden insbesondere durch Scherkräfte zwischen Schiebern zweier benachbarten Förderschienen bei gleichzeitigem gegenläufigen Vor- beziehungsweise Rückzug hervorgerufen. Der Weiteren kommt es gelegentlich zu einem belastenden Aufschwimmen von Förderschienen auf dem Material. DE 12 92 066 B offenbart ein Fördersystem gemäß dem Oberbegriff des Anspruchs 1.

Es ist daher eine Aufgabe der Erfindung, diese und weitere Nachteile des Standes der Technik zu beseitigen. Insbesondere soll ein dahingehend verbessertes Fördersystem geschaffen werden. Insbesondere soll das Fördersystem robuster, langlebiger und/oder pflegeleichter ausgeführt werden.

Ein erfindungsgemäßes Fördersystem für Schüttgut zur Lösung der genannten Aufgabe weist die Merkmale des Anspruchs 1 auf. Das Fördersystem dient vorzugsweise zum Fördern von Material aus einem Materialbehälter heraus, wie beispielsweise einem Silobehälter oder allgemeiner einem Biomassebehälter. Das Fördersystem weist wenigstens eine linear bewegliche Förderschiene auf. Die wenigstens eine Förderschiene ist insbesondere längsverschieblich, also beweglich gelagert in Richtung ihrer Längserstreckung. Es ist wenigstens ein alternierender Antrieb der wenigstens einen Förderschiene vorgesehen, mit einer Vorschubbewegung zur Förderung und einer Rückzugbewegung zur Materialaufnahme. An der Förderschiene ist wenigstens ein Schieber zum Ergreifen und Fördern des Materials angeordnet. Das Fördersystem zeichnet sich dadurch aus, dass am wenigstens einen Schieber wenigstens ein Schieberelement verschwenkbar gelagert ist, wobei das Schieberelement zwischen einer bei einer Vorschubbewegung abstehenden Vorschubstellung und einer bei einer Rückzugbewegung anliegenden Rückzugstellung verschwenkbar ist. Abstehend bedeutet insbesondere, dass das Schieberelement unter einem möglichst kleinen und/oder spitzen Winkel zur Senkrechten der Längserstreckung der Förderschiene ausgerichtet ist. Anliegend bedeutet insbesondere, dass das Schieberelement unter einem möglichst kleinen und/oder spitzen Winkel zur Längserstreckung der Förderschiene ausgerichtet ist. Auf diese Weise kann das Schieberelement in der Vorschubstelluna möglichst viel Material mitnehmen, während in der Rückzugsstellung möglichst wenig Material wieder zurückbewegt wird.

Die Rampenabschnitte dienen zur Verdrängung von Schüttgut nach oben bei der Rückbewegung der Förderschiene. Vorzugsweise wird das Material über den Schieber hinweg geleitet. Dies bedeutet insbesondere, dass das Material bei der Rückzugsbewegung über den Schieber hinweg statt wie im Stand der Technik seitlich an diesem vorbei transportiert wird. Auf diese Weise fällt das Material direkt hinter den Schieber, wo es bei der Vorschubbewegung von den Schieberelementen ergriffen werden kann.

Auf jeder Seite des Schiebers ist vorzugsweise wenigstens ein Schieberelement angeordnet. Weiter vorzugsweise handelt es sich dabei um genau ein Schieberelement. Mit den Seiten des Schiebers sind insbesondere die linke und rechte Seite desselben beziehungsweise der jeweiligen Förderschiene in Draufsicht gemeint, also parallel zur Ebene des Bodens, seitlich von der Förderschiene abstehend. Vorzugsweise ist dazu die Schwenkachse und/oder Drehachse der Schieberelemente senkrecht oder nahezu senkrecht ausgerichtet. Durch beidseitige Anordnung kann eine gleichmäßige beidseitige Förderung erreicht werden.

Weiter bevorzugt sind die Schieberelemente auf den beiden gegenüberliegenden Seiten des Schiebers symmetrisch ausgebildet und/oder ausgerichtet. Durch eine symmetrische Ausbildung kann eine gleichmäßige Belastung und Förderung sichergestellt werden. Die symmetrische Ausrichtung ist dabei vorzugsweise auf eine der Stellungen, also bei Ausrichtung in die Vorschubstellung und/oder die Rückzustellung bezogen.

Die Schieberelemente sind vorzugsweise abgerundet und/oder abgeschrägt. Weiter bevorzugt sind die Schieberelemente oberseitig und/oder endseitig und/oder an den freien Endbereichen abgerundet und/oder abgeschrägt und/oder verjüngen sich. Damit kann erreicht werden, dass die Kraftwirkung in Richtung der Endbereiche reduziert ist. Auch kann der Materialfluss über die Schieberelemente hinweg verbessert werden.

Insbesondere ist oberhalb der Förderschiene wenigstens ein weiteres Schieberelement angeordnet, also nach oben ausgerichtet. Es handelt sich vorzugsweise ein nach oben verschwenkbares Schieberelement. Vorzugsweise ist dazu die Schwenkachse und/oder Drehachse des Schieberelements horizontal oder nahezu horizontal ausgerichtet. Ein solches Schieberelement kann auch einen oberseitigen Materialtransport sicherstellen.

Das wenigstens eine Schieberelement weist vorzugsweise wenigstens einen Vorsprung auf. Dieser Vorsprung dient zum Eingreifen von Schüttgut beziehungsweise Material bei einer Vorschubbewegung, vorzugsweise zum Verschwenken des Schieberelements in die Vorschubstellung. Mit anderen Worten bleibt ein derartiger Vorsprung bei einer Vorschubbewegung an Material hängen, so dass das jeweilige Schieberelement aus der Rückzugsstellung in die Vorschubstellung verschwenkt werden kann. Somit wird ein selbsttätiges Verschwenken in die Vorschubstellung erreicht.

Der wenigstens eine Schieber ist vorzugsweise mit der Förderschiene lösbar verbunden. Damit kann erreicht werden, dass beispielsweise bei Abnutzung oder Defekten ein unkomplizierter Austausch nur des jeweiligen Schiebers erfolgen kann.

Bevorzugt ist die Förderschiene aus mehreren Modulen gebildet. Es handelt sich dabei vorzugsweise um mehrere, weiter vorzugsweise identische Abschnitte. Jeder der Abschnitte weist vorzugsweise einen oder mehrere Schieber auf. Die Abschnitte sind vorzugsweise lösbar verbunden. Ein modularer Aufbau ermöglicht einen flexiblen Aufbau wie auch eine einfache Wartung. Einzelne defekte Elemente oder Module können so einfach ausgetauscht werden.

Es sind insbesondere mehrere, vorzugsweise alle Schieberelemente eines Schiebers und/oder einer Förderschiene miteinander gekoppelt bewegbar. Dies erfolgt insbesondere durch mechanische Kopplung und/oder mittels eines Antriebs, insbesondere eines gemeinsamen Antriebs. Beispielsweise kann es sich um eine hydraulischen Antrieb, einen Kettentrieb oder ähnliches handeln.

Bevorzugt sind mehrere, vorzugsweise alle Förderschienen mit einem gemeinsamen Antrieb wirkverbunden, insbesondere gekoppelt. Mehrere oder alle der Förderschienen sind insbesondere gleichgerichtet bewegbar. Mehrere der Förderschienen sind insbesondere gegenläufig bewegbar. Beispielsweise können benachbarte Förderschienen gegenläufig bewegbar sein, um eine optimale Fördergeschwindigkeit zu erreichen. Auch können mehrere oder alle Förderschienen im Gleichtakt bewegbar sein, um speziellen Materialien oder Einsatzzwecken gerecht werden zu können.

Im Bereich von Wanddurchführungen der Förderschiene sind insbesondere Ableitelemente, wie insbesondere Ableitkeile, angeordnet. Derartige Ableitelemente für eine seitliche Ableitung und/oder Verdrängung von Material beziehungsweise Schüttgut.

Auf diese Weise soll verhindert werden, dass sich Material zumindest in größerer Menge im Bereich der Wanddurchführung ansammelt und somit eine alternierende Bewegung aufgrund einer kompaktierten Materialansammlung erschwert. Ein Ableitelement beziehungsweise Ableitkeil kann dafür sorgen, das Material seitlich und/oder oberhalb wegzuführen.

Vorzugsweise weist der wenigstens eine Schieber wenigstens eine Abtrennung beziehungsweise Schottwand zur Verschließen von Toträumen gegen Eindringen von Schüttgut auf. Damit können Hohlräume auf einfache Weise verschlossen werden, Damit können Toträume in den Komponenten der bekannten Fördersysteme beseitigt werden, die sich anderenfalls unerwünscht mit Material füllen würden und dann gereinigt werden müssten.

Ein erfindungsgemäßes Verfahren zum Fördern von Schüttgut zur Lösung der eingangs genannten Aufgabe weist die Maßnahmen des Anspruchs 14 auf. Dieses Verfahren basiert auf dem oben beschriebenen Fördersystem. Das Verfahren zeichnet sich dadurch aus, dass das wenigstens eine Schieberelement bei einer Vorschubbewegung der Förderschiene gegen das Material ausklappt und/oder bei einer Rückzugbewegung der Förderschiene gegen das Material einklappt. Auf diese Weise kann erreicht werden, dass bei Rückzugsbewegungen weniger Kraft aufgewendet werden muss. Umgekehrt kann aber bei einer Vorschubbewegung eine maximale Menge am Material gefördert werden.

Mehrere und/oder alle Förderschienen des Fördersystems können gleichgerichtet und/oder alternierend bewegt oder angetrieben werden.

Bevorzugte Ausführungsbeispiele der Erfindung werden im Folgenden anhand der Figuren der Zeichnung näher beschrieben. In dieser zeigen:
Fig. 1 eine Seitenansicht eines Materialbehälters mit Fördersystem,
Fig. 2 eine Draufsicht auf den Materialbehälter mit Fördersystem der Fig. 1,
Fig. 3 eine perspektivische Ansicht einer Förderschiene mit Schiebern und Schieberelementen in Vorschubstellung,
Fig. 4 eine perspektivische Ansicht einer Förderschiene mit Schiebern und Schieberelementen in Rückzugsstellung,
Fig. 5 ein Verbindungselement zur Verbindung von Antrieb und Förderschiene,
Fig. 6 eine Ableitkeil,
Fig. 7 eine Förderschiene mit Ableitkeil und Schieberelementen in Vorschubstellung,
Fig. 8 die Förderschiene der Fig. 7 mit Ableitkeil und Schieberelementen in Rückzugsstellung,
Fig. 9 eine weitere Förderschiene gemäß der Erfindung mit zusätzlichem Schieberelement in Vorschubstellung,
Fig. 10 die Förderschiene der Fig. 9 in Rückzugsstellung,
Fig. 11 eine weitere Förderschiene gemäß der Erfindung mit zusätzlichem Schieberelement in Vorschubstellung,
Fig. 12 die Förderschiene der Fig. 11 in Rückzugsstellung, und
Fig. 13 eine Darstellung des modularen Aufbaus der Module der Förderschiene.

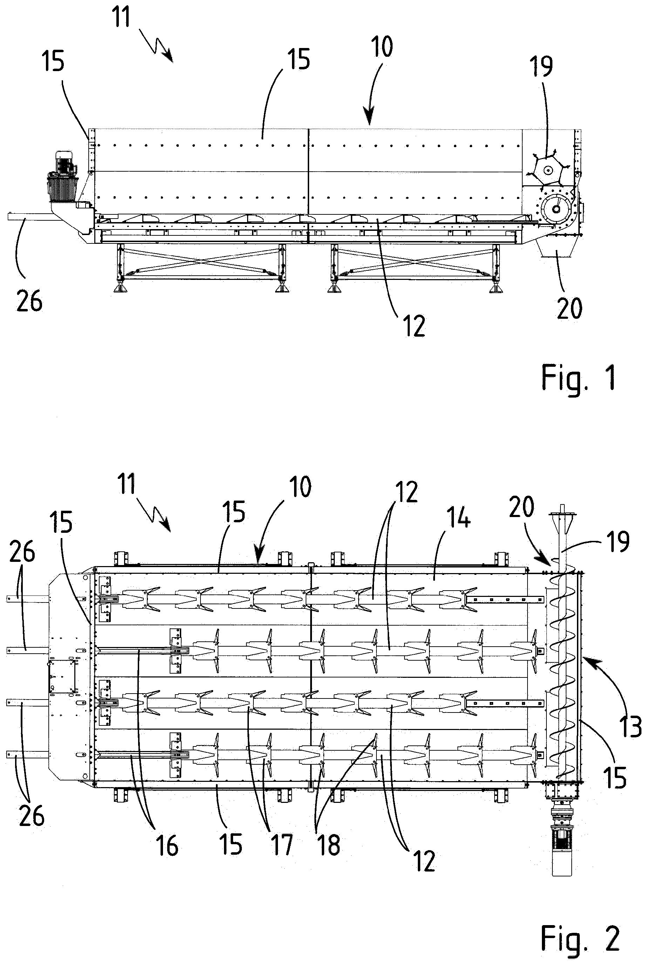

In der Fig. 1 ist ein Materialbehälter 10 mit einem Fördersystem 11 in einer Seitenansicht dargestellt. Die Fig. 2 zeigt dazu eine Draufsicht, also eine Sicht von oben in den hier oben offenen Materialbehälter 10 hinein.

Der Materialbehälter 10 ist demnach als offener Behälter gestaltet. In diesen wird das nicht gezeigte Material von eingebracht, um es dann mittels des Fördersystems 11 aus diesem heraus zu fördern. Damit kann eine dosierte Entnahme des Materials aus dem Materialbehälter 10 erfolgen. Als Material kommen beispielsweise Silage, Tierfutter, Biomasse, wie oder ähnliches, in Betracht.

Mehrere Behältersegmente oder Behältermodule lassen sich miteinander kombinieren. Auf diese Weise sind längere und/oder größere Materialbehälter 10 und Fördersysteme 11 erstellbar. Die einzelnen Module oder Segmente werden dazu miteinander gekoppelt, da deren Bestandteile wiederum modular aufgebaut sind. Die hier in den Fig. 1 und 2 gezeigten zwei unterschiedlichen Module können beispielsweise durch spezielle Zwischenmodule verlängert werden.

Das hier diskutierte Fördersystem 11 weist eine oder mehrere Förderschienen 12 auf. Diese dienen dazu, das Material auf eine Seite, hier eine Stirnseite 13 des Materialbehälters 10 zu fördern. Der Materialbehälter 10 weist einen Boden 14 und vier Wände 15 auf. Dabei befindet sich eine der Wände 15 an der Stirnseite 13 des Materialbehälters 10.

In der Regel sind mehrere der Förderschienen 12 auf dem Boden des Behälters 10 angeordnet. Mehrere Förderschienen 12 sind dabei typischerweise parallel zueinander verlaufend angeordnet. Damit kann eine Förderung in derselben Förderrichtung erreicht werden. Der abzufördemde Bereich kann entsprechend durch Hinzufügen von Förderschienen 12 verbreitert werden. Im gezeigten Ausführungsbeispiel überdecken die Förderschienen 12 den Boden 14 des Materialbehälters 10 größtenteils. Auf diese Weise kann ein nahezu vollflächiger Materialtransport erreicht werden.

Die Förderschienen 12 sind allgemein im Bereich des Bodens 14 des Materialbehälters 10 angeordnet. Die Förderschienen 12 verlaufen dabei wie im gezeigten Fall unmittelbar auf dem Boden 14. Sie können gegebenenfalls jedoch auch teilweise oder ganz in den Boden 14 eingelassen sein.

Im bevorzugten Fall gleiten die Förderschienen 12 jeweils auf einer Gleitschiene 16. Die Gleitschienen 16 sind dazu insbesondere aus einem reibungsarmen Material, wie vorzugsweise aus Kunststoff gebildet. Weiter vorzugsweise handelt es sich dabei um Polyethylen (PE). Mit Gleitschienen 16 oder auch mit anderen Gleitlagern wird im Ergebnis für eine verringerte Reibung gesorgt.

Die Gleitschienen 16 sind im vorliegenden Fall in den Boden 14 eingelassen. Hierzu sind entsprechende Nuten zur Aufnahme der Gleitschienen 16 im Boden 14 vorgesehen. Zur Vermeidung von Toträumen werden sie typischerweise zumindest nahezu flächenbündig mit der Ebene des Bodens 14 ausgebildet. Alternativ können sie auch auf den Boden 14 aufgebracht werden. Die Gleichschienen 16 entsprechen in ihrer Breite idealerweise in etwa der Breite der Förderschienen 12 beziehungsweise deren unterer Auflagefläche.

Zur Förderung des Materials ist an jeder der Förderschienen 12 wenigstens ein Schieber 17 angeordnet, in der Regel aber sind mehrere Schieber 17 angeordnet. Jeder der Schieber 17 weist wiederum eines oder mehrere Schieberelemente 18 auf. Diese dienen dazu, das Material zu ergreifen und in einer Richtung zu fördern, hier in Richtung der Stirnseite 13 des Behälters 10 zu bewegen.

Jede der Förderschienen 12 weist wie hier gezeigt ist in der Regel mehrere Schieber 13 auf. Damit wird ein gleichmäßiger und großflächiger Transport des Materials erreicht, insbesondere in einem Materialbehälter 10.

Der Materialbehälter 10 beziehungsweise das Fördersystem 11 weist im vorliegenden Fall eine Abtragsvorrichtung, hier in Form einer Förderschnecke 19, auf. Diese

Förderschnecke 19 als Abtragsvorrichtung ist im Bereich der Stirnfläche 13 vorgesehen. Die Förderschnecke 19 als Förderelement oder Abtragsvorrichtung transportiert das aus dem Materialbehälter 11 geförderte Material seitlich weiter heraus zum Auslass 20. Auch lassen sich ohne weiteres andere Förderelemente als Abtragsvorrichtung einsetzen.

Die eigentliche Förderung des Materials erfolgt mittels der Schieberelemente 18 an den Schiebern 17. Die Förderschienen 12 sind dazu alternierend beweglich angeordnet. Konkret lassen sie sich zwischen den gegenüberliegenden Wänden 14 des Materialbehälters 10 hin und her schieben. Die Bewegung der Förderschiene 12 erfolgt also alternierend entlang der Längserstreckung der Förderschiene 12. Eine Bewegung der Förderschiene 12 in Richtung der Stirnseite 13 wird hierbei als Vorschubbewegung angesehen. Als Rückzugbewegung wird dagegen eine Bewegung weg von der Stirnseite 13 bezeichnet.

Um auf diese Weise nicht nur Hin- und Herschieben des Materials zwischen den Wänden 14 zu erreichen, sondern eine Förderung im Wesentlichen nur in einer Richtung, nämlich hier in Richtung der Stirnseite 13, sind zusätzliche Maßnahmen nötig. Die Schieber 17 können dazu die gezeigte pfeilförmige Gestaltung aufweisen. So gleitet ein Teil des Materials bei der Rückzugsbewegung am Schieber 17 vorbei und über diesen hinweg, während bei der Vorschubbewegung mehr Material hinter den flügelförmigen Schieberelementen 18 hängen bleibt. So wird im Ergebnis mehr Material bei der Vorschubbewegung als bei der Rückzugsbewegung transportiert.

Zur weiteren Verbesserung des Transports des Materials lassen sich die Schieberelemente 18 in verschiedenen Stellungen, nämlich vorzugsweise einer Vorschubstellung und einer Rückzugsstellung ausrichten. Die Schieberelemente 18 sind dazu verschwenkbar am jeweiligen Schieber 17 gelagert. Konkret ist eine Schwenkachse 21 der Schieberelemente 18 jeweils senkrecht zur Bewegungsrichtung der Förderschiene 12 ausgerichtet. Im vorliegenden Beispiel verlaufen die Schwenkachsen 21 der Schieberelemente 18 demnach in senkrechter Richtung.

Damit wird erreicht, dass die Schieberelemente 18 bei einer Vorschubbewegung der Förderschiene 12 von der Förderschiene 12 abstehend ausgerichtet werden. Bei einer Rückzugsbewegung der Förderschiene 12 werden sie dagegen an der Förderschiene 12 anliegend ausgerichtet. Die Vorschubbewegung und die Rückzugsbewegung erfolgen entgegengesetzt, insbesondere alternierend. So wird entsprechend eine alternierende Förderung von Material erreicht.

Die der Anlenkung an der Förderschiene 12 beziehungsweise der Schwenkachse 21 gegenüberliegenden Endbereiche 22 der Schieberelemente 18 sind vorwiegend mit dem Material in Kontakt. Die Schieberelemente 18 werden folglich bei einer Vorschubbewegung der Förderschiene 12 insbesondere an ihren jeweiligen Endbereich 22 von Material ergriffen. Aufgrund dessen werden die Schieberelemente 18 in Richtung der, von der Förderschiene 12 abstehenden Ausrichtung verschwenkt. Dazu sollte der jeweilige Endbereich 22 des Schieberelements 18 im an der Förderschiene 12 anliegenden Zustand zumindest so weit von der Förderschiene 12 abstehen, dass sich ausreichend Material ansammeln kann, um die Schwenkbewegung bei der Vorschubbewegung zu erreichen.

Umgekehrt werden die Schieberelemente 18 bei einer Rückzugsbewegung der Förderschiene 12 vom Material in Richtung der an die Förderschiene 12 angelehnten Stellung verschwenkt. Das Material wirkt dabei auf die gesamte rückseitige Fläche des Schieberelements 18 ein. Damit verschwenkt das Schieberelement 18 in die an die Förderschiene anliegende Stellung. Auf diese Weise kann eine gegenüber der Vorschubbewegung deutlich reduzierte Querschnittsfläche beim Rückzug und damit insbesondere ein geringerer Kraftbedarf erreicht werden.

Die beiden Fälle sind bereits in der Fig. 2 gezeigt. Die von oben erste und dritte Förderschiene 12 sind in der Rückzugstellung mit anliegenden Schieberelementen 18 dargestellt. Die von oben zweite und vierte Förderschiene 12 sind in der Vorschubstellung mit abstehenden Schieberelementen 18 gezeigt.

Da sich gezeigt hat, dass trotz der einklappbaren Schieberelemente 18 dennoch erhebliche Kräfte bei der Rückzugsbewegung auf alle Bestandteile des Fördersystems 11 einwirken, wurden weitere Verbesserungen vorgenommen.

Im Stand der Technik wird das Material nämlich im Wesentlichen seitlich wegtransportiert, aufgrund der typischerweise pfeilförmigen Ausbildung der Schieber 17. Dies führt zu erhöhtem Kraftaufwand aufgrund von Verdichtungen von Material. Insbesondere kommt es zu solchen unerwünschten Verdichtungen im Bereich zwischen zwei sich begegnenden Schiebern 17 benachbarter Förderschienen 12.

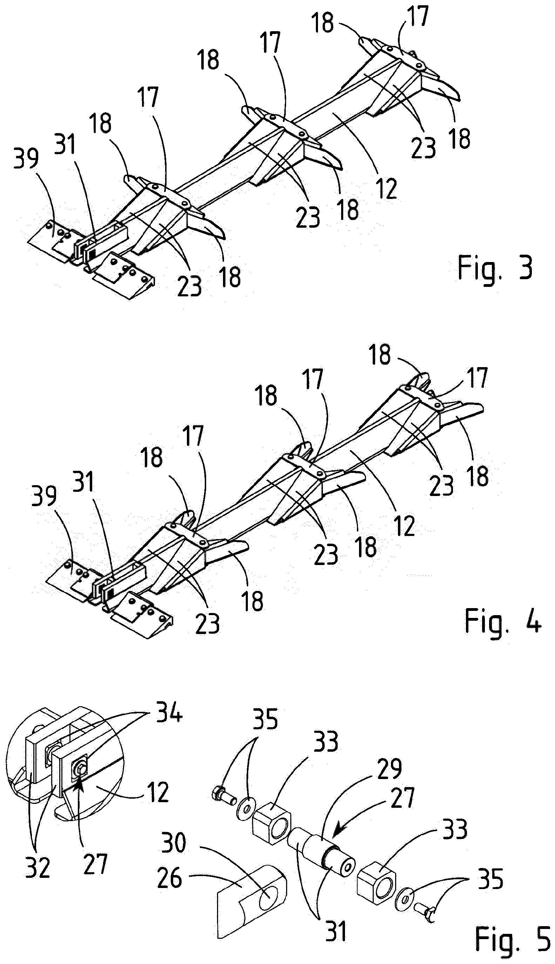

Wie unter anderem in den Fig. 3 und 4 gezeigt ist, sind erfindungsgemäß keilförmige beziehungsweise rampenartige Bereiche als sogenannte Rampenabschnitte 23 an den Schiebern 17 ausgebildet. Diese Rampenabschnitte 23 verlaufen hier von der bodennahen Vorderkante 24 bis zur Oberseite 25 der Schieber 17 ansteigend. Auf diese Weise enden die Rampenabschnitte 23 kurz vor den Schwenkachsen 21 der Schieberelemente 18.

Je Schieber 17 sind hier zwei Rampenabschnitte 23 vorgesehen. Diese befinden sich auf den beiden Seiten der Förderschiene 12, also seitlich zu dieser.

Diese Rampenabschnitte 23 sorgen dafür, dass das Material bei der Rückzugsbewegung zumindest im Wesentlichen über den Schieber 17 hinweg transportiert wird anstatt seitlich an diesem vorbei. Damit werden seitliche Materialverdichtungen vermieden. Nach oben kann das Material dagegen typischerweise frei weggedrückt werden, ohne dabei sonderlich zu verdichten.

Vorteile bietet diese Ausbildung von Rampen 23 auch für die Vorschubbewegung, da das Material oberhalb der beziehungsweise hinter den Schieberelementen 18 liegt, sobald von der Rückzugsbewegung in die Vorschubbewegung umgeschaltet wird. Die Schieberelementen 18 können aufgrund des bereits vorhandenen Materials unmittelbar ausklappen. Sie müssen dazu nicht wie ohne Rampenabschnitte 23 erst Material seitlich ergreifen.

Außerdem sorgt die rampenförmige Ausbildung der Schieber 17 dafür, dass die Förderschiene 12 mit den Schiebern 17 auf den Boden 14 beziehungsweise die Gleitschiene 18 heruntergedrückt wird. Dieses Anpressen erfolgt praktisch durchgängig während der Rückzugsbewegung. Damit werden unerwünschte Aufwärtsbewegungen vermieden, die beispielsweise aufgrund von Materialansammlungen unter der Schiene 12 zustande kommen können.

Die Rampenabschnitte 23 sind hier als ebene Flächen ausgebildet. Sie können jedoch auch andere Verläufe aufweisen. Beispielsweise können kurvenförmige Verläufe sinnvoll sein.

Jede der Förderschiene 12 muss mit einem Abtrieb verbunden werden. Dies kann an einem oder sogar an beiden Endbereichen der Förderschiene 12 erfolgen. Mittels des Antriebs kann die alternierende Bewegung der Förderschienen 12 linear in Richtung der Längserstreckung der Förderschienen 12 erreicht werden.

Dabei lassen sich alle Förderschienen 12 gleichsinnig antreiben, also alle in gleicher Bewegungsrichtung betreiben. Es kann jedoch auch eine Bewegung nur einer Hälfte der Förderschienen 12 in einer gemeinsamen Richtung und der anderen Hälfte gegenläufig vorteilhaft sein. Beispielsweise lassen sich so möglicherweise Unwuchten und Vibrationen reduzieren. Vorzugsweise erfolgt der Antrieb dann paarweise oder gruppenweise gleichgerichtet beziehungsweise abwechselnd. Hierbei sind unterschiedliche Antriebsarten, wie beispielsweise Linearantriebe, Pneumatik, Hydraulik oder auch diverse motorische Antriebe denkbar, beispielsweise als Kettentrieb. Mehrere Förderschienen 12 können auch gekoppelt angetrieben werden.

Im vorliegenden Beispiel ist in den Fig. 1 und 2 jeweils ein Hydraulikzylinder 26 je Förderschiene 12 als Linearantrieb vorgesehen. Die Anlenkung erfolgt hier an dem freien Endbereich der Förderschienen 12. Der freie Endbereich ist derjenige, der der Stirnseite 13 des Materialbehälters 10 und damit der Förderschnecke 19 gegenüberliegt. Damit kommen der Antrieb und die Förderschnecke 19 nicht in Konflikt.

Die Hydraulikzylinder 26 sind mit den Förderschienen 12 mittels spezieller Bolzenverbinder 27 als Verbindungselement verbunden. Diese Bolzenverbinder 27 sind beispielhaft in der Fig. 5 gezeigt. Sie sind lösbar, um beispielsweise schnell einen Austausch defekter Komponenten ermöglichen zu können.

Die Bolzenverbinder 27 beinhalten einen zentralen zylindrischen Bolzen 28. Dessen Mittelstück 29 wird in den Durchbruch 30 im Stempel des Hydraulikzylinders 26 formschlüssig eingesetzt. Seitlich ragen dann jeweils zylindrische Fortsätze 31 des Bolzens 28 heraus. Diese überstehenden Fortsätze 31 weisen hier einen etwas kleineren Querschnitt auf als das Mittelstück 29. Die Fortsätze 31 ragen seitlich in entsprechende Durchbrüche 33 des gabelförmigen Endbereichs als Haltegabel 32 der Förderschiene 12 hinein.

Diese Durchbrüche 33 in der Haltegabel 32 der Förderschiene 12 sind hier quadratisch ausgebildet. Zur Befestigung sind quadratische Einsatzstücke 34 vorgesehen. Diese werden mittels einer Kombination aus Scheiben und Schrauben 35 gesichert. Auf diese Weise wird eine stabile und bewegliche und gleichzeitig auch lösbare Befestigung erreicht.

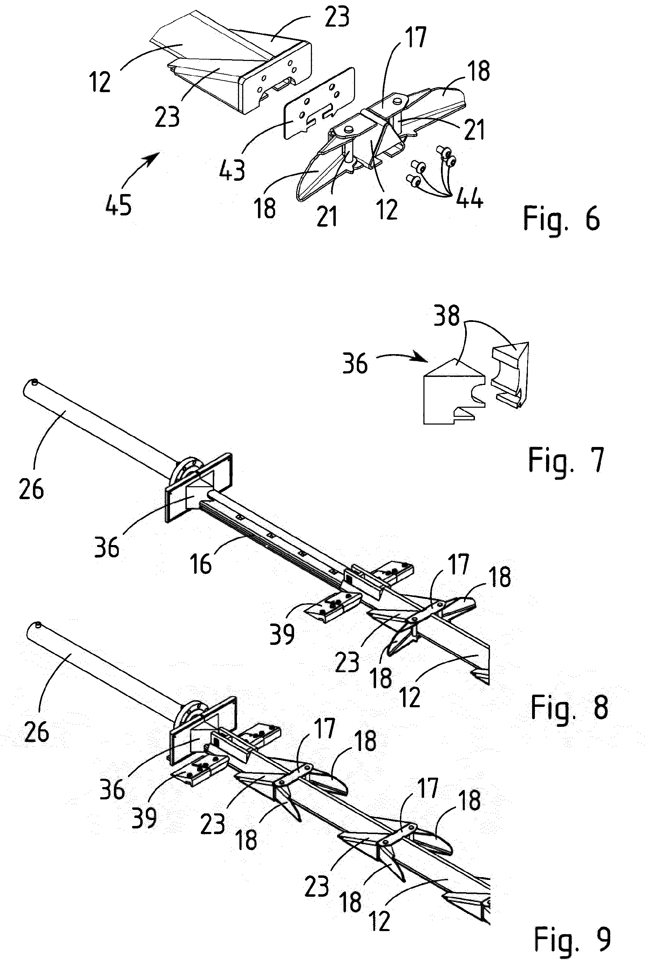

In den Fig. 7 bis 9 ist die Verwendung eines sogenannten Ableitkeils 36 gezeigt. Dieser Ableitkeil 36 dient dazu, eine Durchführung 37 der Förderschiene 12 durch eine Wand 14 zu verbessern.

Typischerweise sammelt sich im laufenden Betrieb des Fördersystems 11 zunehmend Material im Bereich zwischen Wand 14 und der Förderschiene 12 an. Dies gilt insbesondere für den von der Förderschnecke 19 abgewandten Bereich des Behälters 10. Es resultiert daraus, dass bei jeder Rückzugsbewegung der Förderschiene 12 kleinere Mengen Material auch in diese Richtung und damit in Richtung Wand 14 transportiert werden. Somit kommt es zunehmend zu einer Ansammlung, Verdichtung und schließlich zu erheblich erhöhtem Kraftaufwand zum Weiterbetrieb der Anlage.

Ein Ableitkeil 36, wie beispielsweise der hier gezeigte, dient dazu, dieses Material seitlich von der Förderschiene 12 wegzubewegen. Somit wird erreicht, dass Verdichtungen des Materials im Bereich zwischen Wand 14 und Förderschiene 12 vermieden werden. Auf diese Weise wird auch ein Zusetzen des Durchbruchs 37 mit Material vermieden.

Der Ableitkeil besteht hier aus zwei Hälften 38. Diese Hälften 38 können zusammengesetzt und beispielsweise miteinander verschraubt werden. Die Hälften 36 weisen dazu zusammengesetzt im Innenbereich eine Aussparung in Form der Förderschiene 12 auf, um diese sicher und möglichst ohne Lücken zu umschließen. Auf diese Weise lassen sich Ableitkeile 36 nachrüsten oder auch einfach wechseln.

Als weiteres Element zur Verbesserung der Betriebssicherheit werden Messer 39 am vorderen Endbereich der Förderschiene 12 beschrieben. Diese sind insbesondere in den Fig. 2, 3, 4, 8 und 9 jeweils im vorderen Endbereich der Förderschienen 12 gezeigt.

Diese Messer 39 dienen dazu, den Arbeitsbereich der Förderschiene 12 freizuhalten, insbesondere bei der Rückzugsbewegung. Dabei wird der Bereich des Bodens 14 freigeschabt, über den sich die Schieber 17 bewegen. Die Messer 39 sind dazu leicht keilförmig ausgebildet mit einer vorderen Schnittkante 40. Mit dieser Schnittkante 40 werden sie hier bei der Rückwärtsbewegung über den Boden 14 geschoben. Damit wird eventuelles auf dem Boden anhaftendes Materialgelöst, so dass es die Bewegung der Schieber 17 nicht mehr stören kann. Außerdem kann es dann einfach von den Schiebern 17 abtransportiert werden.

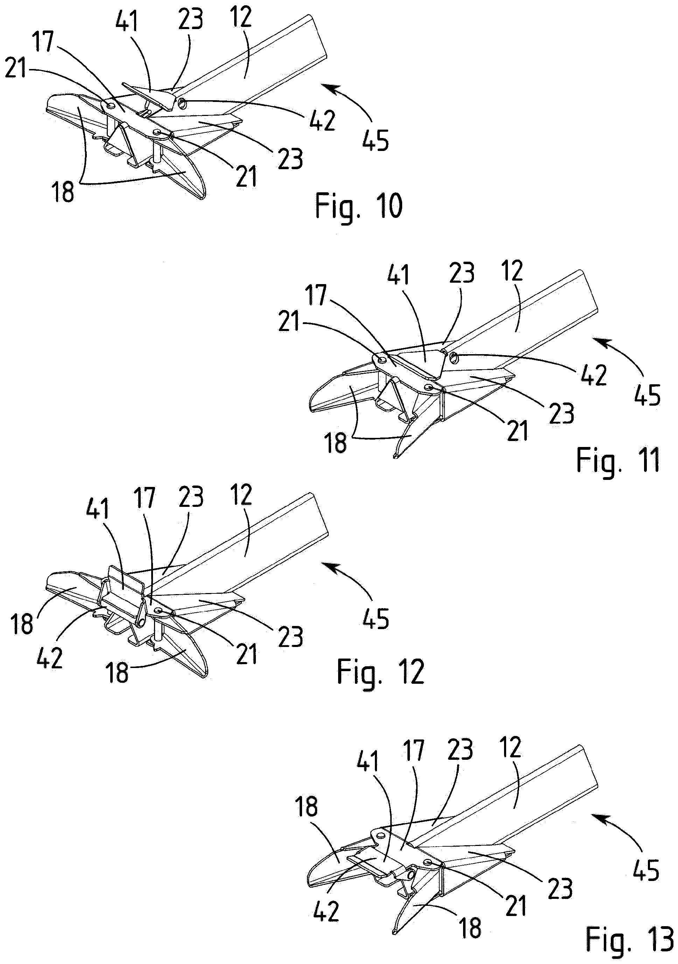

Die Fig. 10 bis 13 zeigen zwei weitere bevorzugte Ausführungsbeispiele der Erfindung mit zusätzlichen Bestandteilen. Diese basieren auf den obigen Beispielen und Beschreibungen und wurden entsprechend um weitere Bestandteile ergänzt.

In diesen Abbildungen sind ebenfalls Förderschienen 12 mit Schiebern 17 dargestellt. Die Schieber 17 weisen dort aber zusätzliche Schieberelemente 41 auf. Diese Schieberelemente 41 sind dabei jeweils oben auf den Schiebern 17 angeordnet. Sie dienen dazu, zusätzliches Material zu fördern und somit die Effizienz der Förderung zu verbessern.

Beide Varianten des zusätzlichen Schieberelements 41 sind auch wieder verschwenkbar am Schieber 17 gelagert. Hierzu dient auch hier eine Schwenkachse 42. Die Schieberelemente 41 sind hier nach oben und unten verschwenkbar. Daher ist diese Schwenkachse 42 horizontal ausgerichtet, außerdem senkrecht zur Förderschiene 12.

Auch hier ist eine von der Förderschiene 12 abstehende Ausrichtung der Schieberelemente 41 zur Förderung von Material vorgesehen. Eine an der Förderschiene 12 anliegende Ausrichtung dient zur Erleichterung der Rückzugsbewegung wie bei den Schieberelementen 18 durch Verkleinerung des Querschnitts.

In den Fig. 10 und 11 ist dabei eine dreieckförmige oder auch "flossenförmige" Ausführung des zusätzlichen Schieberelements 41 gezeigt. Die Fig. 12 und 13 zeigen dagegen eine rechteckige Form des zusätzlichen Schieberelements 41. In Fig. 10 und 12 ist die von der Förderschiene 12 abstehende Ausrichtung gezeigt, also diejenige für die Vorschubbewegung. Die Fig. 11 und 13 zeigen jeweils die an der Förderschiene 12 anliegende Ausrichtung für die Rückzugsbewegung.

Im Bereich zwischen den Schieberelementen 17 kann ohne weitere Vorkehrungen Material in das Innere des Schiebers 17 eindringen. Dies führt dazu, dass hier das Material in Toträume, beispielsweise innerhalb der Rampenabschnitte 23 eindringen kann. Außerdem kann das Material auch die Bewegung der Schieberelemente 18 und 41 einschränken.

Demnach ist hier vorzugsweise wenigstens eine Schottwand 43 vorgesehen. Diese Schottwand 43 trennt den Innenraum des Schiebers 17 von der Umgebung ab. Sie dient dazu, den Innenraum des Schiebers 17 von Material freizuhalten.

Die Förderschienen 12 sind vorzugsweise aus mehreren Abschnitten modulartig zusammengesetzt. Dies ist insbesondere in der Fig. 6 zu erkennen. Ein Abschnitt der Förderschiene 12 mit zugehörigen Rampenabschnitten 23 wird dazu mit einer Schottwand 43 und einem Schieber 17 verbunden. Dazu sind entsprechende Schrauben 44 vorgesehen. Damit wird ein Modul 45 der Förderschiene 12 gebildet. Mehrere dieser Module 45 lassen sich dann zu einer längeren Förderschiene 12 zusammensetzen. Damit werden sowohl der Aufbau wie auch ein Austausch defekter oder abgenutzter Module 45 oder deren Komponenten auf einfache Weise möglich.

Ein bevorzugtes beispielhaftes Verfahren zum Betreiben des Fördersystems basiert auf den obigen Beschreibungen.

Dabei werden die Förderschienen 12 entsprechend alternierend angetrieben. Die Schieberelemente 18 und/oder 41 verschwenken dabei aufgrund der Materialeinwirkung entsprechend. Bei einer Vorschubbewegung verschwenken sie nach außen in eine abstehende Stellung, um Material zu fördern. Bei einer Rückzugsbewegung verschwenken sie aufgrund der Materialeinwirkung in die anliegende Stellung, um möglichst wenig Querschnittsfläche beim Rückzug zu bieten.

Jedes der Schieberelemente 18 und 41 kann grundsätzlich einzeln verschwenken. Somit können bei einer Verhinderung eines Verschwenkens einzelne Schieberelemente 18 und 41 nicht oder nicht vollständig in die der jeweiligen Bewegungsrichtung zugeordnete Ausrichtung bewegbar sein. Die übrigen Schieberelemente 18 und 41 könne ihre Förderleistung dann aber unabhängig davon versehen.

Gegebenenfalls ist auch eine Kopplung des Verschwenkens mehrerer Schieberelemente 18 und 41 denkbar. Hierzu können mechanische Lösungen vorgesehen sein, beispielsweise mittels Zahnrädern oder Hebeln. Auch kann ein grundsätzlich eine durch die Bewegungsrichtung vorgegebene Ausklappen beispielsweise durch ein Gestänge oder ähnliches erfolgen.

### Bezugszeichenliste

- 10: Materialbehälter
- 11: Fördersystem
- 12: Förderschiene
- 13: Stirnseite
- 14: Boden
- 15: Wand
- 16: Gleitschiene
- 17: Schieber
- 18: Schieberelement
- 19: Förderschnecke
- 20: Auslass
- 21: Schwenkachse
- 22: Endbereich
- 23: Rampenabschnitt
- 24: Vorderkante
- 25: Oberseite
- 26: Hydraulikzylinder
- 27: Bolzenverbinder
- 28: Bolzen
- 29: Mittelstück
- 30: Durchbruch
- 31: Fortsatz
- 32: Haltegabel
- 33: Durchbruch
- 34: Einsatzstück
- 35: Scheibe und Schraube
- 36: Ableitkeil
- 37: Durchführung
- 38: Hälfte
- 39: Messer
- 40: Schnittkante
- 41: Schieberelement
- 42: Schwenkachse
- 43: Schottwand
- 44: Schraube
- 45: Modul

## Patentansprüche

1. Fördersystem für Schüttgut, vorzugsweise für pastöse und/oder stückige und/oder faserige Materialien, wie insbesondere Siloinhalten, vorzugsweise aus einem Materialbehälter (10), mit wenigstens einer linear beweglichen Förderschiene (12), wobei wenigstens ein alternierender Antrieb der wenigstens einen Förderschiene (12) mit einer Vorschubbewegung zur Förderung und einer Rückzugbewegung zur Materialaufnahme vorgesehen ist, wobei an der Förderschiene (12) Schieber (17) zum Ergreifen und Fördern des Materials angeordnet sind, wobei an den Schiebern (17) Schieberelemente (18, 41) verschwenkbar gelagert sind, wobei die Schwenkachsen (21) der Schieberelemente (18) senkrecht oder nahezu senkrecht ausgerichtet sind, wobei die Schieberelemente (18, 41) zwischen einer bei einer Vorschubbewegung abstehenden Vorschubstellung und einer bei einer Rückzugbewegung anliegenden Rückzugstellung verschwenkbar sind, wobei keilförmige beziehungsweise rampenartige Bereiche als Rampenabschnitte (23) an den Schiebern (17) ausgebildet sind, **dadurch gekennzeichnet, dass** die Rampenabschnitte (23) von der bodennahen Vorderkante (24) bis zur Oberseite (25) der Schieber (17) ansteigend verlaufen und kurz vor den Schwenkachsen (21) der Schieberelemente (18) enden.

2. Fördersystem nach Anspruch 1, **dadurch gekennzeichnet, dass** die Rampenabschnitte (23) zur Verdrängung von Schüttgut nach oben bei der Rückbewegung der Förderschiene (12), vorzugsweise über den Schieber (17) hinweg, vorgesehen sind.

3. Fördersystem nach Anspruch 1 oder 2, **dadurch gekennzeichnet, dass** auf jeder Seite des Schiebers (17) wenigstens ein Schieberelement (18) angeordnet ist, vorzugsweise genau ein Schieberelement (18).

4. Fördersystem nach einem der vorhergehenden Ansprüche, **dadurch gekennzeichnet, dass** die Schieberelemente (18) auf den beiden gegenüberliegenden Seiten des Schiebers (17) symmetrisch ausgebildet und/oder ausgerichtet sind.

5. Fördersystem nach einem der vorhergehenden Ansprüche, **dadurch gekennzeichnet, dass** die Schieberelemente (18, 41) abgerundet und/oder abgeschrägt sind und/oder sich verjüngen, vorzugsweise oberseitig und/oder endseitig und/oder an den freien Endbereichen.

6. Fördersystem nach einem der vorhergehenden Ansprüche, **dadurch gekennzeichnet, dass** oberhalb der Förderschiene (12) ein weiteres Schieberelement (41) angeordnet ist, vorzugsweise ein nach oben verschwenkbares Schieberelement (41).

7. Fördersystem nach einem der vorhergehenden Ansprüche, **dadurch gekennzeichnet, dass** das wenigstens eine Schieberelement (18, 41) wenigstens einen Vorsprung aufweist zum Eingreifen von Schüttgut beziehungsweise Material bei einer Vorschubbewegung, vorzugsweise zum Verschwenken des Schieberelements (18, 41) in die Vorschubstellung.

8. Fördersystem nach einem der vorhergehenden Ansprüche, **dadurch gekennzeichnet, dass** der wenigstens eine Schieber (17) mit der Förderschiene (12) lösbar verbunden ist.

9. Fördersystem nach einem der vorhergehenden Ansprüche, **dadurch gekennzeichnet, dass** die Förderschiene (12) aus mehreren Modulen gebildet ist, vorzugsweise aus mehreren, weiter vorzugsweise identischen Abschnitten, wobei jeder Abschnitt einen oder mehrere Schieber (17) aufweist, wobei die Abschnitte vorzugsweise lösbar verbunden sind.

10. Fördersystem nach einem der vorhergehenden Ansprüche **dadurch gekennzeichnet, dass** mehrere, vorzugsweise alle Schieberelemente (18, 41) eines Schiebers (17) und/oder einer Förderschiene (12) miteinander gekoppelt bewegbar sind, insbesondere durch mechanische Kopplung und/oder mittels eines Antriebs.

11. Fördersystem nach einem der vorhergehenden Ansprüche **dadurch gekennzeichnet, dass** mehrere, vorzugsweise alle Förderschienen (12) mit einem gemeinsamen Antrieb wirkverbunden, insbesondere gekoppelt sind, wobei mehrere oder alle der Förderschienen (12) gleichgerichtet bewegbar sind und/oder wobei mehrere der Förderschienen (12) gegenläufig bewegbar sind.

12. Fördersystem nach einem der vorhergehenden Ansprüche **dadurch gekennzeichnet, dass** im Bereich von Wanddurchführungen (37) der Förderschiene (12) Ableitelemente, wie insbesondere Ableitkeile (36), zur insbesondere seitlichen Ableitung von Material beziehungsweise Schüttgut angeordnet sind.

13. Fördersystem nach einem der vorhergehenden Ansprüche **dadurch gekennzeichnet, dass** der wenigstens eine Schieber (17) wenigstens eine Abtrennung beziehungsweise Schottwand (43) zur Verschließen von Toträumen gegen Eindringen von Schüttgut aufweist.

14. Verfahren zur Förderung von Schüttgut mit wenigstens einem Fördersystem (11) nach einem der vorhergehenden Ansprüche, wobei das wenigstens eine Schieberelement (18, 41) bei einer Vorschubbewegung der Förderschiene (12) gegen das Material ausklappt und/oder bei einer Rückzugbewegung der Förderschiene (12) gegen das Material einklappt.

15. Verfahren zur Förderung von Schüttgut nach Anspruch 14, **dadurch gekennzeichnet, dass** mehrere und/oder alle Förderschienen (12) des Fördersystems (11) gleichgerichtet und/oder alternierend bewegt oder angetrieben werden.

## Claims

1. Conveying system for bulk material, preferably for pasty and/or lumpy and/or fibrous materials, such as in particular silo contents, preferably from a material container (10), having at least one linearly movable conveying rail (12), wherein at least one alternating drive of the at least one conveying rail (12) is provided with an advance movement for conveying and a retracting movement for material pick-up, wherein scrapers (17) for gripping and conveying the material are arranged on the conveyor rail (12), wherein scraper elements (18, 41) are pivotally mounted on the scrapers (17), wherein the pivot axes (21) of the are aligned vertically or almost vertically, wherein the slide elements (18, 41) can be pivoted between an advanced position in which they project during an advance movement and a retracted position in which they are contiguous during a return movement, wherein wedge-shaped or ramp-like regions are configured as ramp sections (23) on the scrapers (17), **characterised in that** the ramp sections (23) run upwards from the front edge (24) near the base to the top (25) of the scrapers (17) and end shortly before the pivot axes (21) of the scraper elements (18).

2. Conveying system according to claim 1, **characterised in that** the ramp sections (23) are provided to displace bulk material upwards during the return movement of the conveying rail (12), preferably over the scraper (17).

3. Conveying system according to claim 1 or 2, **characterised in that** at least one scraper element (18) is arranged on each side of the scraper (17), preferably exactly one scraper element (18).

4. Conveying system according to one of the preceding claims, **characterised in that** the scraper elements (18) on the two opposite sides of the scraper (17) are designed and/or aligned symmetrically.

5. Conveying system according to one of the preceding claims, **characterised in that** the slide elements (18, 41) are rounded and/or bevelled and/or taper, preferably on the upper side and/or end side and/or at the free end regions.

6. Conveying system according to one of the preceding claims, **characterised in that** a further slide element (41) is arranged above the conveying rail (12), preferably an upwardly pivotable slide element (41).

7. Conveying system according to one of the preceding claims, **characterised in that** the at least one slide element (18, 41) has at least one projection for engaging bulk material or material during a feed movement, preferably for pivoting the slide element (18, 41) into the feed position.

8. Conveying system according to one of the preceding claims, **characterised in that** the at least one scraper (17) is detachably connected to the conveying rail (12).

9. Conveying system according to one of the preceding claims, **characterised in that** the conveying rail (12) is formed from a plurality of modules, preferably from a plurality of sections, which are more preferably identical, each section having one or more scrapers (17), the sections preferably being connected in a releasable manner.

10. Conveying system according to one of the preceding claims, **characterised in that** a plurality of, preferably all, scraper elements (18, 41) of a scraper (17) and/or of a conveying rail (12) can be moved in a coupled manner, in particular by mechanical coupling and/or by means of a drive.

11. Conveying system according to one of the preceding claims, **characterised in that** a plurality of, preferably all, conveying rails (12) are operatively connected, in particular coupled, to a common drive, wherein a plurality or all of the conveying rails (12) are movable in the same direction and/or wherein a plurality of the conveying rails (12) are movable in opposite directions.

12. Conveying system according to one of the preceding claims, **characterised in that** discharge elements, such as in particular discharge wedges (36), are arranged in the region of wall openings (37) of the conveying rail (12), for in particular lateral discharge of material or bulk material.

13. Conveying system according to one of the preceding claims, **characterised in that** the at least one scraper (17) has at least one partition or bulkhead (43) for closing off dead spaces against the penetration of bulk material.

14. A method for conveying bulk material using at least one conveyor system (11) according to one of the preceding claims, wherein the at least one slide element (18, 41) swings out against the material during an advance movement of the conveyor rail (12) and/or swings in against the material during a return movement of the conveyor rail (12).

15. A method for conveying bulk material according to claim 14, **characterised in that** several and/or all conveying rails (12) of the conveying system (11) are moved or driven in the same direction and/or in an alternating manner.

## Revendications

1. Système de transport pour des matières en vrac, de préférence pour des matières pâteuses et/ou en morceaux et/ou fibreuses, comme en particulier des contenus de silos, de préférence à partir d'un conteneur de matières (10), avec au moins un rail de transport (12) mobile linéairement, dans lequel il est prévu au moins un entraînement alterné de l'au moins un rail de transport (12) avec un mouvement d'avance pour le transport et un mouvement de retrait pour la réception du matériau, dans lequel des poussoirs (17) sont disposés sur le rail de transport (12) pour saisir et transporter le matériau, dans lequel des éléments de poussée (18, 41) sont montés pivotants sur les poussoirs (17), les axes de pivotement (21) des éléments coulissants (18) étant orientés verticalement ou presque verticalement, les éléments coulissants (18, 41) pouvant pivoter entre une position d'avance éloignée lors d'un mouvement d'avance et une position de retrait adjacente lors d'un mouvement de retrait, des zones en forme de coin ou de rampe étant réalisées sous forme de sections de rampe (23) sur les poussoirs (17), **caractérisé en ce que** les sections de rampe (23) s'étendent en montant depuis le bord avant (24) proche du sol jusqu'au côté supérieur (25) des poussoirs (17) et se terminent peu avant les axes de pivotement (21) des éléments de poussée (18).

2. Système de transport selon la revendication 1, **caractérisé en ce que** les sections de rampe (23) sont prévues pour refouler le produit en vrac vers le haut lors du mouvement de retour du rail de transport (12), de préférence par-dessus le poussoir (17).

3. Système de transport selon la revendication 1 ou 2, **caractérisé en ce qu'**au moins un élément coulissant (18), de préférence exactement un élément coulissant (18), est disposé de chaque côté du poussoir (17).

4. Système de transport selon l'une quelconque des revendications précédentes, **caractérisé en ce que** les éléments de poussée (18) sont réalisés et/ou orientés de manière symétrique sur les deux côtés opposés du tiroir (17).

5. Système de transport selon l'une quelconque des revendications précédentes, **caractérisé en ce que** les éléments coulissants (18, 41) sont arrondis et/ou biseautés et/ou effilés, de préférence en partie supérieure et/ou en partie terminale et/ou au niveau des zones d'extrémité libre.

6. Système de transport selon l'une des revendications précédentes, **caractérisé en ce qu'**un autre élément coulissant (41) est disposé au-dessus du rail de transport (12), de préférence un élément coulissant (41) pouvant pivoter vers le haut.

7. Système de transport selon l'une des revendications précédentes, **caractérisé en ce que** l'au moins un élément coulissant (18, 41) présente au moins une saillie pour l'engagement de produits en vrac ou de matériaux lors d'un mouvement d'avance, de préférence pour le pivotement de l'élément coulissant (18, 41) dans la position d'avance.

8. Système de transport selon l'une des revendications précédentes, **caractérisé en ce que** l'au moins un poussoir (17) est relié de manière amovible au rail de transport (12).

9. Système de transport selon l'une quelconque des revendications précédentes, **caractérisé en ce que** le rail de transport (12) est formé de plusieurs modules, de préférence de plusieurs tronçons, de préférence encore identiques, chaque tronçon comportant un ou plusieurs coulisseaux (17), les tronçons étant de préférence reliés de manière amovible.

10. Système de transport selon l'une des revendications précédentes, **caractérisé en ce que** plusieurs, de préférence tous les éléments coulissants (18, 41) d'un poussoir (17) et/ou d'un rail de transport (12) sont mobiles en étant couplés entre eux, notamment par couplage mécanique et/ou au moyen d'un entraînement.

11. Système de transport selon l'une des revendications précédentes, **caractérisé en ce que** plusieurs, de préférence tous les rails de transport (12) sont en liaison active, en particulier couplés, avec un entraînement commun, plusieurs ou tous les rails de transport (12) étant mobiles dans le même sens et/ou plusieurs des rails de transport (12) étant mobiles en sens inverse.

12. Système de transport selon l'une des revendications précédentes, **caractérisé en ce que** des éléments de déviation, tels que notamment des cales de déviation (36), sont disposés dans la zone des traversées de paroi (37) du rail de transport (12) pour évacuer notamment latéralement le matériau ou le produit en vrac.

13. Système de transport selon l'une des revendications précédentes, **caractérisé en ce que** l'au moins un poussoir (17) présente au moins une séparation ou une cloison (43) pour fermer les espaces morts contre la pénétration de produits en vrac.

14. Procédé de transport de produits en vrac avec au moins un système de transport (11) selon l'une des revendications précédentes, dans lequel l'au moins un élément coulissant (18, 41) se déploie contre le matériau lors d'un mouvement d'avance du rail de transport (12) et/ou se replie contre le matériau lors d'un mouvement de retrait du rail de transport (12).

15. Procédé de transport de matières en vrac selon la revendication 14, **caractérisé en ce que** plusieurs et/ou tous les rails de transport (12) du système de transport (11) sont déplacés ou entraînés dans le même sens et/ou en alternance.
